# NEUE EUROPÄISCHE PATENTSCHRIFT

(11) **EP 2 470 435 B2**
(45) Veröffentlichungstag und Bekanntmachung des Hinweises auf die Entscheidung über den Einspruch: **19.02.2020**
(45) Hinweis auf die Patenterteilung: 11.01.2017
(21) Anmeldenummer: 09756681.4
(22) Anmeldetag: 20.11.2009
(51) Int. Cl.: B65D 41/00

(54) **POLYMERCOMPOUND FÜR DICHTUNGEN BEI FETTHALTIGEN FÜLLGÜTERN**
POLYMER COMPOUND FOR SEALS FOR USE WITH FAT-CONTAINING FILLING MATERIALS
COMPOSÉ POLYMÈRE POUR GARNITURES D'ÉTANCHÉITÉ POUR PRODUITS DE REMPLISSAGE GRAS

(43) Veröffentlichungstag der Anmeldung: 04.07.2012
(73) Patentinhaber: ACTEGA DS GmbH, 28219 Bremen (DE)
(72) Erfinder: POEL, Christiane, 28203 Bremen (DE); SCHLENK, Georg, 27793 Wildeshausen (DE); WITTENBERG, Rüdiger, 28215 Bremen (DE)
(74) Vertreter: Maiwald, Walter
(86) Internationale Anmeldenummer: PCT/EP2009/008273
(87) Internationale Veröffentlichungsnummer: WO 2011/060803

(56) Entgegenhaltungen:
- EP-A1- 0 503 124
- EP-A1- 1 816 086
- EP-A1- 1 894 974
- EP-A1- 2 058 379
- EP-A2- 0 250 057
- WO-A1-2009/059788
- WO-A1-2011/060803
- WO-A2-2008/027283
- JP-A- 2000 301 561
- JP-A- 2001 261 054
- JP-A- 2007 091 770
- US-A- 5 060 818
- US-A1- 2006 199 911
- US-A1- 2009 105 397
- Seema V. Karande et al: "Unique Material Properties and Potential Applications of Novel Olefin Block Copolymers", The Dow Chemical Co., 2006, XP055121772,
- "DuPont Elvax datasheet", DuPont Industrial Polymers, 9 September 2005 (2005-09-09), XP055430315, Retrieved from the Internet: URL:www.dupont.com/industrial-polymers/elv ax/H-08772-2/H-08772-2.html
- "Versify Plastomers and Elastomers", The Dow Chemical Co., March 2007 (2007-03), XP055430320,
- "DOW LDPE 722 Datasheet", IDES, 2009, XP055430324,
- "DOWLEX 2517 datasheet", The Dow Chemical Co., 2005, XP055430334,
- "DOW H700-12 PolyPropylene Resin datasheet", The Dow Chemical Co., March 2003 (2003-03), XP055430339,
- Tony Whelan et al: "Polymer Technology Dictionary", 1994, XP055430341, ISBN: 0412581809 pages 224-225, 230-231,
- "Shore A Hardness Tester", Metrex Instruments, 7 September 2017 (2017-09-07), XP055430346, Retrieved from the Internet: URL:http://metrexinstruments.com/shore-a-h ardness-tester.htm
- "New Olefin Block Copolymers Stretch TPE Processability and Cost Performance", Plastics Technology Online, 8 January 2006 (2006-01-08), XP055430348, Retrieved from the Internet: URL:https://www.ptonline.com/articles/new- olefin-block-copolymers-stretch-tpe-proces sability-and-cost-performance
- "INFUSE Olefin Block Copolymers Datasheet", Dow Elastomers, December 2016 (2016-12), pages 1-4, XP055430351,
- "INFUSE Olefin Block Copolymers, Injection Molding Processing Guide", The Dow Chemical Co., March 2009 (2009-03), pages 1-8, XP055430353,
- Peter Heydasch: "Novel High Performance Polymers", Dow Europe GmbH, April 2007 (2007-04), pages 1-21, XP055430354,
- Römpp-Auszug 'Polymercompounds'
- Auszug aus dem Duden, 'umfassen vs. bestehen aus'

## Beschreibung

Die Erfindung betrifft eine PVC-freie Dichtungseinlage eines Gefäßverschlusses gemäß dem Oberbegriff des Patentanspruches 1.

Größere Gefäßverschlüsse der hier betrachteten Art sind insbesondere Nockendrehverschlüsse, die typischerweise zum Verschluss von Schraubdeckelgläsern für Nahrungsmittel oder Getränke verwendet werden. Bei diesen Nahrungsmitteln handelt es sich oft um fetthaltige Produkte, z.B. Fertignahrung, Saucen, Feinkost, Fisch in Öl, Antipasti, Gewürzpasten und dergleichen, deren Gehalt an Fetten bzw. Ölen die Gefahr erhöht, dass fettlösliche Bestandteile des Verpackungsmaterials sich im Nahrungsmittel lösen.

Besonderes relevant sind diese Anforderungen auch bei Babynahrung, die typischerweise in Gläsern mit Press-on twist-off-Verschlüssen verkauft wird. Während die Industrie für die Dichtungseinlagen von Kronkorken oder Enghals-Flaschenschraubverschlüssen seit längerem PVC-freie Compounds verwendet, werden für Schraubdeckel und dergleichen, die als Gefäßverschlüsse für Gefäße mit einem größeren Innendurchmesser dienen, nach wie vor PVC-haltige Compounds eingesetzt. Üblicherweise werden solche PVC-haltigen Compounds bei Raumtemperatur in flüssiger Form, in Form von weichmacherhaltigen Systemen aufgetragen.

Auf Basis der Weich-PVC-Technologie lassen sich migrationsärmere Dichtungsmassen formulieren, die häufig Polyadipate einsetzen. Diese neigen aufgrund ihres Molekulargewichts weniger zur Migration, eine toxikologische Bewertung insbesondere der im Magen entstehenden Abbauprodukte hat bisher nach unserer Kenntnis jedoch nicht stattgefunden. Die vorgeschriebene Untersuchungsmethode EN 1186 zur Bewertung der Migration postuliert, dass diese nach 10 Tagen Lagerung bei 40°C abgeschlossen ist. Die analytische Praxis lehrt, dass dies im Falle von weichgemachtem PVC nicht der Fall ist, so dass auch bei Einhalten der Testbedingungen Verschlüsse nach wenigen Monaten schon die Migrationsgrenzen überschreiten. Vorzugsweise werden erfindungsgemäß PVC-freie Compounds verwendet. In dem erfindungsgemäßen Produkt wird dieser Effekt durch den Verzicht auf flüssige Bestandteile umgangen.

Es ist jedoch unerwünscht, PVC-haltige Compounds in Verpackungsmaterialien einzusetzen. Bei der üblichen Verbrennung von Haushaltsabfall entstehen aus Halogenkunststoffen säurehaltige Gase, deren Entweichen in die Atmosphäre schädlich ist. Zudem stören schon geringe Mengen PVC das werkstoffliche Recycling von Kunststoffabfällen. Außerdem erfordern solche PVC-basierenden Dichtungselemente den Einsatz von Weichmachern, die aus Gründen der unvertretbaren Veränderung des Lebensmittels ebenfalls bedenklich sind. Weiterhin hat es in den letzten Jahren eine öffentliche Diskussion um in PVC-Dichtungen eingesetzte Additive und deren Zersetzungsprodukte gegeben. Beispiele sind hierfür die 2-Ethylhexansäure, die häufig aus Stabilisatoren stammt und Semicarbazid, dass aus exothermen Treibmitteln wie Azodicarbonamid gebildet werden kann. Diese Substanzen wurden auch in Füllgütern bei amtlichen Kontrollen gefunden und deren Gegenwart beanstandet.

Die Migration von Bestandteilen der Verpackung (zu der gegebenenfalls auch die Dichtungseinlage des Gefäßverschlusses gehört) in das Nahrungsmittel ist nicht nur generell unerwünscht, sondern auch durch gesetzliche Bestimmungen scharf reglementiert. Beispiele solcher Bestimmungen sind die EG-Direktiven 1935/2004, 2023/2006, 2002/72/EG, 372/2007 und 2007/19/EG. Zurzeit sind Höchstmengen von maximal 60 ppm an migrierenden Bestandteilen zugelassen.

Die Messung des Ausmaßes der gegebenenfalls beobachteten Migration erfolgt mittels Verfahren, wie sie insbesondere in der DIN EN 1186 definiert sind. Solche Verfahren finden auch im Kontext der vorliegenden Erfindung Anwendung.

Es ist kein triviales Problem, Gefäßverschlüsse der hier betrachteten Art mit PVCfreien Dichtungseinlagen zu versehen, wenn diese Verschlüsse den genannten Bestimmungen hinsichtlich der eventuellen Migration ihrer chemischen Bestandteile entsprechen müssen. Ebenso muss die Dichtungsfunktion unter Abfüllbedingungen gewährleistet sein.

Für kleine Gefäßverschlüsse sind bereits Dichtungseinlagen mit Barrierewirkung gegenüber bestimmten Kontaminanten verwendet worden, wie sie z.B. in EP 0 503 124 beschrieben sind.

Jedoch sind die Anforderungen an die Dichtungs-Materialien bei Gefäßverschlüssen für größere Innendurchmesser der Gefäßöffnung (schon wegen der relativ größeren Materialmengen in der Dichtung) anspruchsvoller. Für solche Einsatzzwecke kommt es besonders darauf an, eine ausreichende Fließfähigkeit des Polymermaterials bei der Herstellung des Dichtungselementes zu verbinden mit ausreichenden Dichtungseigenschaften im verschlossenen Zustand; hierzu gehört auch die heute erforderliche Dichtigkeit gegenüber dem Eindringen bzw. dem Entweichen von Gasen, gegebenenfalls kombiniert mit einer Überdruckventilwirkung, die das Platzen des Gefäßes beim Erwärmen oder bei der Entwicklung von Überdruck im Gefäß aus anderen Gründen verhindert. Zudem wird aber gerade für die typischen Einsatzzwecke von Gefäßen mit größeren Öffnungsdurchmessern (beispielsweise Konserven) verlangt, dass das Dichtungselement auch unter Sterilisierungsbedingungen einsetzbar ist.

Die in EP 0 503 124 beschriebenen Gefäßverschlüsse, die typischerweise für die Abfüllung von Bier, Softdrinks, Saft und dergleichen in übliche enghalsige Getränkeflaschen gedacht sind, müssen den dort genannten Behandlungen wie Pasteurisierung und Heißfüllung standhalten können. Bei Pasteurisierung und Heißfüllung werden Temperaturen von bis zu 100 °C eingesetzt. Die erfindungsgemäß zu verwendenden Polymermaterialien sind so maßgeschneidert, dass sie für die Pasteurisierung oder Heissfüllung geeignet sind und ebenfalls darüber hinaus im Kontakt mit fetthaltigen Füllgütern ihre Dichtungswirkung im nötigen Umfang beibehalten.

Bei all diesen Charakteristika müssen die Dichtungen auch noch den oben genannten Anforderungen hinsichtlich der eventuellen Migration chemischer Bestandteile entsprechen.

Aus EP 2 058 379 sind Gefäßverschlüsse bekannt, deren Dichtungseinlage auf SEBS und einem PE/PP Copolymer beruht. Ethylen alpha-Olefin-Block Copolymere werden nicht offenbart.

EP 1 816 056, US 5,060,818 und EP 0 250 057 offenbaren ähnliche Polymercompounds auf Basis styrolhaltiger Polymere.

Die Verwendung styrolhaltiger Polymercompounds kann jedoch zu Verarbeitungsproblemen führen, wie nachfolgend noch erörtert wird.

Um die Verarbeitung herkömmlicher Compounds zu erleichtern, werden diesen üblicherweise Streckmittel und/oder Weichmacher zugesetzt. Insbesondere werden dafür bei Anwendungstemperatur flüssige Komponenten wie Strecköle /oder Weichmacher (vorzugsweise Weißöl) verwendet.

Es hat sich nun gezeigt, dass sich solche Compounds zwar, gegebenenfalls nach Modifikation der Rezeptur, auch zu Dichtungseinlagen mit größeren Durchmessern verarbeiten lassen, dass die damit ausgestatteten Gefäßverschlüsse aber den gesetzlichen Bestimmungen hinsichtlich der Migration chemischer Bestandteile nicht immer genügen.

Es besteht daher ein Bedarf für Gefäßverschlüsse, die eine Dichtungseinlage auf Polymerbasis aufweisen, welche nicht auf PVC basiert, und die sich für Gefäße mit relativ großen Öffnungen, oberhalb von 2 cm Innendurchmesser, eignen. Dabei sollen solche Verschlüsse pasteurisierbar sein und keine störende Migration von chemischen Bestandteilen des Dichtungsmaterials zeigen, und zusätzlich sollen die Verschlüsse für fetthaltige Füllgüter verwendet werden.

Es ist eine wesentliche Aufgabe der Erfindung, eine zur Herstellung solcher Gefäßverschlüsse geeignete Dichtungseinlage anzugeben, welches es ermöglicht, den Gefäßverschluss mit einem Dichtungselement auf Polymerbasis zu versehen, welches kein PVC enthält und den gesetzlichen Vorschriften hinsichtlich der Migration von Verpackungskomponenten entspricht.

Zur Lösung der Aufgabe ist eine erfindungsgemäße Dichtungseinlage für Gefäßverschlüsse aus einem Compound mit den Merkmalen ausgebildet, die im Anspruch 1 definiert sind.

Grundsätzlich werden erfindungsgemäß Gefäßverschlüsse auch für solche Gefäße bereitgestellt, deren durch den Gefäßverschluss zu verschließende Öffnung einen Innendurchmesser von mehr als 3 cm aufweist. Das entspricht einem Innendurchmesser, der größer ist als jener, den übliche Getränkeflaschen aufweisen, die mit Kronkorken, Schraubkappen und dergleichen in bekannter Weise verschlossen werden, wie beispielsweise in der EP-B1 1 0 503 124 beschrieben.

Besonders eignet sich die Erfindung für die Herstellung von relativ großen Gefäßverschlüssen, also für Gefäßöffnungen mit einem Innendurchmesser von mehr als 2,5 cm bis herauf zu solchen, bei denen der Innendurchmesser der zu verschließenden Öffnung größer als 4 cm ist.

Solche Gefäßverschlüsse eignen sich als Schraubdeckel für Flaschen, wie beispielsweise Saft- oder Milchflaschen, für Konservengläser, Marmeladengläser und dergleichen, und insbesondere für Schraubdeckelgläser für fetthaltige (insbesondere ölhaltige) Nahrungsmittel wie Saucen, Gewürzpasten und dergleichen.

Die erfindungsgemäßen Gefäßverschlüsse eignen sich (z. B. in Form sogenannter Press-on twist-off-Verschlüsse) auch für die Verpackung von Baby- und Kleinkindnahrung in entsprechenden Gläsern.

Bei den erfindungsgemäßen Gefäßverschlüssen ist das Dichtungselement in ähnlicher Weise als Einlage auf der Innenfläche des Gefäßverschlusses ausgebildet, wie dies bei den bekannten Kronkorken bzw. Schraubkappen auch der Fall ist.

Während man den bekannten Flaschenverschlüssen (Kronkorken und dergleichen) das Dichtungselement meist als Kreisscheibe auf der Innenseite des Gefäßverschlusses ausbildet, kann es bei größeren Gefäßverschlüssen wie gemäß der Erfindung vorteilhaft sein, stattdessen nur einen Ring aus Polymermaterial auszubilden, der im verschlossenen Zustand des Gefäßes an der Gefäßwand im Öffnungsbereich anliegt. Solche ringförmigen Dichtungselemente sind bekannt, werden aber wie ausgeführt bisher ausschließlich aus PVC- und weichmacherhaltigem Material hergestellt, obwohl es auch PU-Materialien gibt, aus denen die oben genannten Dichtungselemente hergestellt werden.

Hierzu kann das in US 5,763,004 beschriebene Verfahren verwendet werden, das durch Bezugnahme in die vorliegende Beschreibung aufgenommen wird,

Grundsätzlich wird gemäß dem erfindungsgemäßen Herstellungsverfahren von einem Gefäßverschluss-Rohling aus Metall ausgegangen, der vorzugsweise zunächst auf seiner Innenseite mit einem geeigneten Primer vorbehandelt wird. Bei einem Kunststoff Gefäßverschluss ist diese Vorbehandlung nicht nötig.

Für gewöhnlich ist die Zusammensetzung des Primers auf Epoxy-Phenol basierend. Insbesondere eignet sich hierfür ein Lacksystem der Firma ACTEGA Rhenania (Grundlack TPE279 mit Haftlack TPE 1500), auf dem die erfindungsgemäß am meisten bevorzugten Compounds besonders gut haften. Der Haftlack kann aber auch auf Polyestern basierend sein.

Alternativ dazu kann man eine geeignete Primerbeschichtung durch Laminierung, Kaschierung oder eventuell auch durch Co-Extrusion aufbringen.

Auf den so vorbehandelten Rohling wird innenseitig das Polymermaterial, das die Dichtung bilden soll, in thermisch fließfähig gemachter Form aufgetragen. Insbesondere eignet sich hierfür eine Extrusion, bei welcher das Dichtungscompound im Temperaturbereich zwischen 100 °C und 260 °C vorgelegt wird.

Die Extrusion kann etwa in die Mitte der Rohling-Innenfläche erfolgen, wenn die Dichtungseinlage kreisscheibenförmig ausgebildet sein soll. Die Dosierung des Polymermaterials für die Extrusion erfolgt über das Abstreifen einer definierten Menge des Polymercompounds an einer Düse.

Nachfolgend wird das kreisschreibenförmige Dichtungselement aus dem extrudierten, noch fließfähigen Material durch entsprechende Stempelung (analog dem bekannten SACMI-Verfahren) geformt.

In abgewandelter Form kann das Dichtungselement außerhalb des Verschlusses oder Verschlussrohlings durch Verstempelung eines geeigneten Polymermaterials geformt und anschließend in den Verschluss oder Rohling eingebracht werden. Dieses Verfahren ist ebenfalls durch SACMI für kleine Verschlüsse als outshell-moulding bekannt.

Spezifischer handelt es sich bei der Erfindung grundsätzlich um Dichtungseinlagen für Gefäßverschlüsse aus Metall oder Kunststoff für Gefäße zur Aufnahme von Getränken oder Nahrungsmitteln, die vor der Migration von Verpackungsbestandteilen entsprechend den gesetzlichen Vorschriften geschützt werden müssen. Das sind beispielsweise ölhaltige oder fetthaltige Nahrungsmittel, wie beispielsweise Fertignahrung, insbesondere aber ölhaltige Saucen und Gewürzpasten, beispielsweise Currypaste. In den Öl- und Fettbestandteilen solcher Nahrungsmittel lösen sich Streckmittel wie Weißöl, aber auch Weichmacherbestandteile besonders leicht.

Um einen dichten Verschluss des Gefäßes zu gewährleisten, verfügen die erfindungsgemäßen Gefäßverschlüsse über eine Dichtungseinlage, die den weiter oben genannten Anforderungen hinsichtlich ihrer Verarbeitbarkeit einerseits, ihrer Dichtungseigenschaften andererseits entspricht und die auch die gesetzlichen Anforderungen hinsichtlich der Migration von Verpackungskomponenten erfüllt.

Um dies zu erreichen, ist das Material der Dichtungseinlage so gewählt, dass die Migration von Bestandteilen des Materials in fetthaltige Füllgüter weitgehend verhindert wird, so dass in Übereinstimmung mit den geltenden europäischen Normen nicht mehr als 60 ppm bevorzugt deutlich weniger als 60 ppm migrierender Bestandteile im Füllgut nachweisbar sind.

Als Hauptbestandteil umfasst das Material der Dichtungseinlage eine polymere Komponente, die zwei verschiedene Polymere umfasst. In der vorliegenden Beschreibung kann der Begriff "Copolymer" die gleiche Bedeutung haben wie der Begriff "Interpolymer", wie auch in der Patentschrift US-B 1 6 235 822 beschrieben. Die Eigenschaften dieser hauptsächlichen polymeren Komponente können durch die Beimischung weiterer Komponenten, beispielsweise weiterer Polymere, geeignet modifiziert werden. So wurde überraschenderweise festgestellt, dass ein Olefin-Block-Copolymerwie in EP-B1 0 714 427 beschrieben zur Lösung der Aufgabe, als Hauptkomponente dienlich ist, insbesonders wenn es mit einem zweiten Polymer gemischt wird. Als zweites Polymer eignen sich bestimmte random-Copolymere gegebenenfalls zusammen mit, oder ersetzt durch, HDPE oder (co)-PP.

Dabei ist erfindungsgemäß vorgesehen, dass das Material der Dichtungseinlage nur sehr geringe und besonders bevorzugt gar keine Gehalte von Bestandteilen aufweist, die bei Anwendungstemperatur flüssig sind. Die Anwendungstemperatur ist üblicherweise gleich der Umgebungstemperatur, also im Bereich üblicher Umgebungstemperaturen im Freien bzw. in beheizten Räumen.

Erfindungsgemäß werden daher dem Material der Dichtungseinlage nur geringe oder vorzugsweise gar keine Gehalte an flüssigen Streckmitteln wie insbesondere Weißöl zugesetzt.

Erfindungsgemäß enthält das Material nicht mehr als 10 %, vorzugsweise nicht mehr als 7 %, insbesondere nicht mehr als 4 % und besonders bevorzugt nicht mehr als 1 % von Gleitmitteln, die bei einem Migrationstest bei 40 °C für 10 Tage beschränkt in das fetthaltige Füllgut übergehen.

Es ist gegenwärtig am meisten bevorzugt, dass das Material innerhalb der zum Anmeldungszeitpunkt gegebenen analytischen Bestimmungsgrenzen überhaupt keine bei Anwendungstemperatur flüssigen Bestandteile enthält.

Weiterhin wird es bevorzugt, dass das Material der Dichtungseinlage keine Weichmacher enthält.

Da sich Compounds für solche Dichtungseinlagen gegebenenfalls ohne Streckmittelzusatz nur schwer verarbeiten lassen, insbesondere wenn der Durchmesser des Gefäßverschlusses 3 cm überschreitet, wenn das Material etwa wie in EP 0 503 124 beschrieben, auf der Basis von styrolhaltigen Block-Copolymeren mit elastomeren Kettenabschnitten aufgebaut ist, werden gemäß der Erfindung solche Materialien verwendet, die diese Polymere nicht enthalten.

Es ist daher bevorzugt, wenn das Material, aus dem die Dichtungseinlage geformt wird, weder die genannten flüssigen Streckmittel, noch Weichmacher, noch styrolhaltige Block-Copolymere mit elastomeren Kettenabschnitten enthält.

Stattdessen wird bevorzugt, dass das Polymermaterial, das den Hauptbestandteil der Dichtungseinlage bildet, auf bestimmten Polyalkylenen aufbaut, die sich ohne Streckmittel und dergleichen auch zu Dichtungseinlagen für Gefäßverschlüsse mit Durchmessern von mehr als 3 cm verarbeiten lassen.

Es hat sich herausgestellt, dass sich hierfür einerseits besonders gut ein Block-Copolymer eignet, das zum einen Polyethyleneinheiten umfasst, und zum anderen aus einem Alken-Monomer aufgebaut worden ist, welches aus Propen, Buten, Hexen und (insbesondere) Okten ausgewählt worden ist.

Solche Copolymere lassen sich mittels Metallocen-Katalysatoren gezielt mit den gewünschten physikalischen Eigenschaften erzeugen.

Geeignete Polymere sind in EP-B1 0 714 427 beschrieben. Dort wird angegeben, dass sich diese Polymere als solche auch zu Dichtungseinlagen verarbeiten lassen, wobei keinerlei Additive hinzugefügt werden sollen. Die Erfindung basiert unter anderem hingegen auf der Feststellung, daß sich diese Polymere zu verbesserten Dichtungseinlagen verarbeiten lassen, wenn die erfindungsgemäßen Additive hinzutreten. Das Problem der Migration von Materialbestandteilen bei fetthaltigen Füllgütern wird hier nicht angesprochen.

Andererseits eignet sich als Bestandteil des Compounds besonders gut ein random-Copolymer, das als lineares oder verzweigtes Interpolymer zum einen aus Ethylen, und zum anderen aus wenigstens einem C₃-C₂₀-alpha-Olefin aufgebaut ist.Geeignete random-Polymere sind z.B., in US 6,235,822 beschrieben.

Erfindungsgemäß hat sich dabei herausgestellt, dass andere Rezepturvarianten möglich sind, bei denen das Block-Copolymer im Bereich von mindestens 20 %, das random-Copolymer im Bereich von 0-80%, und als zusätzliche Bestandteile andere Polyolefine, insbesondere HDPE oder (co)PP mit bis zu 25%, vorliegen.

Erfindungsgemäß kann die Rezeptur ein Ethylen-Okten-Block-Copolymer, wie z.B. Infuse D9007 im Bereich von 37%-41%, ein Ethylen-Okten-random-Copolymer, wie z.B. Engage 8402 im Bereich von 58%-62%, ein Antioxidans, wie z.B. Irganox 1010 im Bereich von 0,1%-0,3%, ein Stabilisator wie z.B. Irgafos 168 im Bereich von 0,0%-0,2%, ein Gleitmittel wie z.B. Erucasäureamid im Bereich von 0,2%-0,4%, ein Gleitmittel wie z.B. Ölsäureamid im Bereich von 0,2%-0,4%, beeinhalten.

Eine beispielhafte Rezeptur zum Gebrauch für Pasteurisation und Heißabfüllung umfasst:

| | |
|---|---|
| Ethylen-Okten-Block-Copolymer: | 39,1% |
| Ethylen-Okten-random-Copolymer: | 60% |
| Antioxidans: | 0,2% |
| Stabilisator: | 0,1% |
| Gleitmittel: | 0,6% |

Erfindungsgemäß hat das genannte Material generell eine Shore A Härte von 45 bis 95 und insbesondere rezepturgemäß eine Shore A Härte von etwa 85 bei einer Shore D Härte von etwa 25. Der Druckverformungsrest (DVR) des Polymercompounds (analog bestimmt nach Druckverformungstest ASTM D395-97 Methode B) liegt zwischen 50 und 80%.

Die Polymermaterialien können einer Heissfüllung von bis 100 °C für bis zu 60 min standhalten, ausgehend von einer Heissfüllung von mindestens 60 °C in höchstens 10 min und mindestens 1 min. Die Heissfüllung, ausgehend von 60 °C, kann in Schritten von 5 ° bis hinauf zu 100 °C in 60 min vollzogen werden.

Die scheinbare Scherviskosität bei 185 °C liegt bei 100 s⁻¹ < 100 Pa.s und bei 500 s⁻¹ < 50 Pa.s. Bestimmt wurde diese auf einem Zweikanalrheometer Porpoise P9 mit einem Düsendurchmesser von 0.5mm.

Wahlweise können den Rezepturen der Compounds auch Pigmente, vorzugsweise anorganische Pigmente zugesetzt werden, um eine Pigment-Migration auszuschließen. Es hat sich außerdem gezeigt, dass den Polymercompounds andere Additive wie Wachse, Silikone und insbesondere Treibmittel zugesetzt werden können, um z.B. die Verarbeitung und die Gebrauchseigenschaften zu verbessern.

Weiterhin zeigen die Polymercompounds beim Druckverformungstest analog ASTM D 395-97, Methode B, bei 70 °C generell einen Druckverformungsrest (DVR) von 30-90 %. Für sterilisierte Produkte liegt der DVR bei höheren Werten, bis 90 %. Für pasteurisierbare (aber nicht sterilisierbare) Produkte kann der DVR bei etwas niedrigeren Werten liegen, bis etwa 80 %. Für Compounds mit thermoplastischen Vulkanisaten (TPV-Materialien) kann die Untergrenze des DVR bis herab zu 30 % liegen; für andere Materialien liegt der DVR-Bereich vorzugsweise bei wenigstens 50%.

Diese Materialien lassen sich beispielsweise mit dem in unserer parallelen international Patentanmeldung (Titel "Verfahren zur Herstellung eines Gefäßverschlusses") beschriebenen Verfahren auch zu großen Dichtungselementen für entsprechend große Gefäßverschlüsse verarbeiten. Hierdurch wird es erstmalig möglich, beispielsweise Nockendrehverschlüsse mit Durchmessern von mehr als 60 mm mit einer Dichtungseinlage zu versehen, die den Bestimmungen der EC-Direktiven 1935/2004, 2023/2006, 2002/72/EG, 372/2007 und 2007/19/EC entspricht.

Im Zusammenhang mit diesen gesetzlichen Vorschriften müssen Migrationstests erfolgen, die an den erfindungsgemäßen Gefäßverschlüssen in der Art und Weise durchgeführt werden, wie in der DIN EN 1186 beschrieben sind. Auf eine Wiedergabe dieser Messverfahren im Kontext der vorliegenden Anmeldung wird daher verzichtet; diese Tests werden durch Bezugnahme auf die DIN EN 1186 in den Offenbarungsgehalt der vorliegenden Anmeldung einbezogen.

Durch die Verwendung des genannten Polymermaterials wird erfindungsgemäß erreicht, dass die solchermaßen hergestellte Dichtungseinlage nicht nur unproblematisch hergestellt werden kann und die Dichtungseigenschaften aufweist, die eingangs beschrieben worden sind. Darüber hinaus sind solche Gefäßverschlüsse pasteurisierbar, und sie erfüllen die genannten europarechtlichen Vorschriften hinsichtlich der Migration von Bestandteilen des Polymermaterials in das Getränk oder Nahrungsmittel, insbesondere in fetthaltige Füllgüter, welche im erfindungsgemäß verschlossenen Gefäß enthalten sind.

Insoweit bilden die Vorschriften der genannten europarechtlichen Direktiven, insbesondere im Zusammenhang mit den Testkriterien der DIN EN 1186, geeignete Auswahlkriterien für das Polymermaterial, das sich aus der Vielzahl grundsätzlich denkbarer Compounds durch Verzicht auf bei Anwendungstemperatur flüssige Bestandteile und nachfolgendes Testen auffinden lässt.

## Patentansprüche

1. PVC-freie Dichtungseinlage eines Gefäßverschlusses, insbesondere für fetthaltige Füllgüter, bestehend aus einem Polymercompound, **dadurch gekennzeichnet, dass** die Shore A Härte des Polymercompounds zwischen 45 und 95 liegt und das Polymercompound beim Druckverformungstest analog ASTM D395-97 Methode B bei 70°C einen Druckverformungsrest (DVR) von 30-90% zeigt; wobei das Compound ein Block-Copolymer enthält, welches aus Polyethylen und Propen, Buten, Hexen oder Octen aufgebaut ist, sowie ein zweites Polymer enthält, das ein aus Ethylen und wenigstens einem C₃-C₂₀-alpha-Olefin aufgebautes random-Copolymer, HDPE oder(co)-PP ist, und wobei das Polymercompound kein Polymer auf Basis von Styrol-haltigen Block-Copolymeren mit elastomeren Kettenabschnitten und nicht mehr als 10% an Gleitmitteln, die bei 40°C für 10 Tage beschränkt in das fetthaltige Füllgut übergehen, enthält, und so zusammengesetzt ist, dass die Migration von Bestandteilen des Compounds in das Füllgut reduziert wird.

2. Dichtungseinlage nach Anspruch 1, **dadurch gekennzeichnet, dass** das Block-Copolymer eine Dichte von 0.85 bis 1,1 g/cm³ aufweist und vorzugsweise einen Schmelzindex (MFI) von 0,01 g/10 min bis 1000 g/10 min insbesondere einen MFI von 1 g/10 min bis 100 g/10 min bei einer Auflage von 5 kg bei 190°C aufweist.

3. Dichtungseinlage nach Anspruch 2, **dadurch gekennzeichnet, dass** das Block-Copolymer aus Ethylen und Okten gebildet ist.

4. Dichtungseinlage nach Ansprüchen 1, 2, oder 3 **dadurch gekennzeichnet, dass** das Compound bis zu 80% des random-Copolymers enthält, wobei das random-Copolymer vorzugsweise ein lineares Interpolymer von Ethylen und einem C₃-C₂₀-alpha-Olefin oder ein branched-Interpolymer von Ethylen und einem C₃-C₂₀-alpha-Olefin ist.

5. Dichtungseinlage nach Anspruch 4, **dadurch gekennzeichnet, dass** das random-Copolymer eine Dichte von 0.85 bis 1.1 g/cm³.

6. Dichtungseinlage nach einem der Ansprüche 1 bis 5, **dadurch gekennzeichnet, dass** das random-Copolymer Ethylen und ein weiteres Alken, ausgewählt aus Propen, Buten, Hexen und Okten, und besonders Ethylen und Okten umfasst.

7. Dichtungseinlage gemäß Anspruch 6, bei dem wenigstens ein Co-Polymer durch Metallocenkatalyse polymerisiert ist.

8. Dichtungseinlage nach Anspruch 1, **dadurch gekennzeichnet, dass** das Compound wenigstens 20% wenigstens eines Olefin-(Co)polymers enthält, welches kein Block-Copolymer ist.

9. Dichtungseinlage nach einem der Ansprüche 1 bis 8, **dadurch gekennzeichnet, dass** das Compound eine Shore A Härte von 65 bis 90 und besonders bevorzugt eine Shore A Härte von etwa 85 bei einer Shore D Härte von etwa 25 hat.

10. Dichtungseinlage nach einem der Ansprüchen 1 bis 9, **dadurch gekennzeichnet, dass** der Druckverformungsrest des Compounds bei 70°C zwischen 55% und 75% und insbesondere bei etwa 70% liegt.

11. Dichtungseinlage nach einem der Ansprüchen 1 bis 10, welches Additive wie Wachse, Silikone und insbesondere Treibmittel enthält.

12. Dichtungseinlage nach einem der Ansprüche 1 bis 11, bei dem der Gefäßverschluss ein Nockendrehverschluss, ein Press-on twist-off ® Verschluss, Stülpdeckel, crimp-on oder ein anrollbarer Metallverschluss ist.

13. Dichtungseinlage nach einem der Ansprüche 1 bis 12, bei dem die Zusammensetzung des Materials der Dichtungseinlage so gewählt ist, dass der Verschluss die Bestimmungen der Verordnung (EG) 1935/2004 erfüllt.

14. Dichtungseinlage nach einem der Ansprüche 1 bis 13, bei dem die Zusammensetzung des Materials der Dichtungseinlage so gewählt ist, dass der Verschluss die Bestimmungen der Verordnung (EG) 2023/2006 erfüllt.

15. Dichtungseinlage nach einem der Ansprüche 1 bis 14, bei dem die Zusammensetzung des Materials der Dichtungseinlage so gewählt ist, dass der Verschluss die Bestimmungen der Richtlinie 2002/72/EG erfüllt.

16. Dichtungseinlage nach einem der Ansprüche 1 bis 15, bei dem die Zusammensetzung des Materials der Dichtungseinlage so gewählt ist, dass der Verschluss die Bestimmungen der Verordnung (EG) 372/2007 erfüllt.

17. Dichtungseinlage nach einem der Ansprüche 1 bis 16, bei dem die Zusammensetzung des Materials der Dichtungseinlage so gewählt ist, dass der Verschluss die Bestimmungen der Richtlinie 2007/19/EG erfüllt.

## Claims

1. PVC-free sealing insert for a container, particularly for substances containing fat, consisting of a polymer compound, **characterized in that** the Shore A hardness of the polymer compound is between 45 and 95, and the polymer compound has a compression set of 30-90% according to the compression test analogously to ASTM D395-97 Method B at 70°C; wherein the compound contains a block copolymer formed from polyethylene and propene, butene, hexene or octene, as well as containing a second polymer that is formed from ethylene and at least one C₃-C₂₀-alpha-olefin random copolymer, HDPE or (co) PP, and wherein the polymer compound does not contain any polymer based on styrol-containing block copolymers with elastomeric chain sections and no more than 10% lubricants, that transition into the substance containing fat at 40°C to a limited extent for 10 days, and is composed so that the migration of components of the compound into the substance is reduced.

2. Sealing insert according to Claim 1, **characterized in that** the block copolymer has a density of 0.85 to 1.1 g/cm³ and preferably a melt flow index (MFI) of 0.01 g/10 min to 1000 g/10 min, in particular an MFI of 1 g/10 min to 100 g/10 min with a 5 kg layer at 190°C.

3. Sealing insert according to Claim 2, **characterized in that** the block copolymer is formed from ethylene and octene.

4. Sealing insert according to Claims 1, 2, or 3 **characterized in that** the compound contains up to 80% of the random copolymer, wherein the random copolymer is preferably a linear interpolymer formed from ethylene and a C₃-C₂₀-alpha-olefin or a branched interpolymer formed from ethylene and a C₃-C20-alpha-olefin.

5. Sealing insert according to Claim 4, **characterized in that** the random copolymer has a density of 0.85 to 1.1 g/cm³.

6. Sealing insert according to one of the Claims 1 to 5, **characterized in that** the random copolymer contains ethylene and another alkene, selected from propene, butene, hexene and octene, and in particular including ethylene and octene.

7. Sealing insert according to Claim 6, in which at least one copolymer is polymerized by metallocene catalysis.

8. Sealing insert according to Claim 1, **characterized in that** the compound contains at least 20% of at least one olefin (co)polymer that is not a block copolymer.

9. Sealing insert according to one of the Claims 1 to 8, **characterized in that** the compound has a Shore A hardness of 65 to 90 and, particularly preferred, a Shore A hardness of approximately 85 at a Shore D hardness of approximately 25.

10. Sealing insert according to one of the Claims 1 to 9, **characterized in that** the compression set of the compound at 70°C is between 55% and 75% and in particular is approximately 70%.

11. Sealing insert according to one of the Claims 1 to 10 that contains additives such as wax, silicones and in particular propellant.

12. Sealing insert according to one of the Claims 1 to 11, for which the container closure is a screw closure, a press-on twist-off ® closure, or a snap-on, crimp-on or roll-on metal closure.

13. Sealing insert according to one of the Claims 1 to 12, for which the composition of the material of the sealing insert is selected so that the closure fulfills the specifications of Regulation (EC) 1935/2004.

14. Sealing insert according to one of the Claims 1 to 13, for which the composition of the material of the sealing insert is selected so that the closure fulfills the specifications of Regulation (EC) 2023/2006.

15. Sealing insert according to one of the Claims 1 to 14, for which the composition of the material of the sealing insert is selected so that the closure fulfills the specifications of Directive 2002/72/EC.

16. Sealing insert according to one of the Claims 1 to 15, for which the composition of the material of the sealing insert is selected so that the closure fulfills the specifications of Regulation (EC) 372/2007.

17. Sealing insert according to one of the Claims 1 to 16, for which the composition of the material of the sealing insert is selected so that the closure fulfills the specifications of Directive 2007/19/EC.

## Revendications

1. Insert d'étanchéité sans PVC pour fermeture de récipient, en particulier pour les matières grasses, composé d'un composé polymère, **caractérisé en ce que** la dureté Shore A du composé polymère est comprise entre 45 et 95 et que le composé polymère présente dans le test de déformation par compression analogue à la méthode ASTM D395-97, méthode B à 70°C un écart permanent (DVR) de 30 à 90 % ; le composé comprenant un copolymère séquencé composé de polyéthylène et de propène, de butène, d'hexène ou d'octène ainsi qu'un second polymère qui est un copolymère statistique, HDPE ou i(co)-PP composé d'éthylène et d'au moins un alpha-oléfine en C₃-C₂₀, le composé polymère ne comprenant pas de polymère à base de copolymères séquencés comprenant du styrène ayant des portions de chaîne élastomère et pas plus de 10 % de lubrifiants qui se confondent de manière limitée à 40°C pendant 10 jours dans le matériau de remplissage graisseux, et est composé de manière à réduire la migration des composants du composé dans le matériau de remplissage.

2. Insert d'étanchéité selon la revendication 1, **caractérisé en ce que** le copolymère séquencé présente une densité de 0,85 à 1,1 g/cm³ et de préférence un indice de fluidité à l'état fondu (MFI) de 0,01 g/10 min à 1000 g/10 min, en particulier un MFI de 1 g/10 min à 100 g/10 min avec un support de 5 kg à 190°C.

3. Insert d'étanchéité selon la revendication 2, **caractérisé en ce que** le copolymère séquencé est formé d'éthylène et d'octène.

4. Insert d'étanchéité selon les revendications 1, 2, ou 3 **caractérisé en ce que** le composé comprend un copolymère statistique jusqu'à 80 %, le copolymère statistique étant de préférence un interpolymère linéaire d'éthylène et d'un alpha-oléfine en C₃-C₂₀ ou un interpolymère ramifié d'éthylène et d'un alpha-oléfine en C₃-C₂₀.

5. Insert d'étanchéité selon la revendication 4, **caractérisé en ce que** le copolymère statistique présente une densité de 0.85 à 1.1 g/cm³.

6. Insert d'étanchéité selon l'une des revendications 1 à 5, **caractérisé en ce que** le copolymère statistique comprend de l'éthylène et un autre alcène choisi parmi le propène, le butène, l'hexène et l'octène, et en particulier l'éthylène et l'octène.

7. Insert d'étanchéité selon la revendication 6, dans lequel au moins un copolymère est polymérisé par catalyse métallocène.

8. Insert d'étanchéité selon la revendication 1, **caractérisé en ce que** le composé comprend au moins 20 % d'au moins un (co)polymère d'oléfine qui n'est pas un copolymère séquencé.

9. Insert d'étanchéité selon l'une des revendications 1 à 8, **caractérisé en ce que** le composé a une dureté Shore A de 65 à 90 et, plus particulièrement, une dureté Shore A d'environ 85 lors d'une dureté Shore D d'environ 25.

10. Insert d'étanchéité selon l'une des revendications 1 à 9, **caractérisé en ce que** l'écart restant du composant à 70°C est compris entre 55 % et 75 % et se situe en particulier à environ 70 %.

11. Insert d'étanchéité selon l'une des revendications 1 à 10, qui comprend des additifs tels que des cires, des silicones et, en particulier, des agents gonflants.

12. Insert d'étanchéité selon l'une des revendications 1 à 11, dans laquelle la fermeture de récipient est une fermeture à visser, une fermeture twist-off ®, un couvercle cloche une fermeture à sertir ou une fermeture à enrouler en métal.

13. Insert d'étanchéité selon l'une des revendications 1 à 12, dans laquelle la composition du matériau de l'insert d'étanchéité est choisie de manière à ce que la fermeture soit conforme aux dispositions du règlement (CE) 1935/2004.

14. Insert d'étanchéité selon l'une des revendications 1 à 13, dans laquelle la composition du matériau de l'insert d'étanchéité est choisie de manière à ce que la fermeture soit conforme aux dispositions du règlement (CE) 2023/2006.

15. Insert d'étanchéité selon l'une des revendications 1 à 14, dans laquelle la composition du matériau de l'insert d'étanchéité est choisie de manière à ce que la fermeture soit conforme aux dispositions de la directive 2002/72/CE.

16. Insert d'étanchéité selon l'une des revendications 1 à 15, dans laquelle la composition du matériau de l'insert d'étanchéité est choisie de manière à ce que la fermeture soit conforme aux dispositions du règlement (CE) 372/2007.

17. Insert d'étanchéité selon l'une des revendications 1 à 16, dans laquelle la composition du matériau de l'insert d'étanchéité est choisie de manière à ce que la fermeture soit conforme aux dispositions de la directive 2007/19/CE.
